# EUROPEAN PATENT APPLICATION

(11) **EP 2 873 768 A1**
(43) Date of publication of application: **20.05.2015**
(21) Application number: 13193506.6
(22) Date of filing: 19.11.2013
(51) Int. Cl.: D06N 7/00, B32B 5/26, D04H 1/4374, D04H 1/4391, D04H 1/498

(54) **Dual layer carpet**

(71) Applicant: Autoneum Management AG, 8406 Winterthur (CH)
(72) Inventor: Godano, Philippe, 8400 Winterthur (CH); Meenakshisundaram, Meganathan, 8404 Winterthur (CH); Delmas, Bertrand, 8406 Winterthur (CH)
(74) Representative: van Adrichem Geisseler, Johanna

(57) **Abstract**

A dual layer carpet comprising at least a needle punched surface layer made of staple fibres and an adjacent needle punched cushioning layer made of staple fibres characterised in that the surface layer and the cushioning layer comprise of at least 25% of hollow staple fibres.

## Description

### Technical Field

The present invention relates to a carpet, flooring or mat for automotive use, mainly to cover the floor area in the passenger compartment and the boot.

### Background Art

Automotive interiors and trunks are traditionally lined with various types of fabrics, but in more recent years tufted or needle punched carpets are used mostly. Tufted carpets are mainly used in the high and medium segment cars. This is mostly due to the feel and touch as well as the abrasion performance asked for in these car segment. These type of carpets are more costly.

Needle punched nonwoven carpets currently on the market are made of solid staple fibres. These carpets are mainly used in the middle and low segment cars. These carpets are in principle less expensive than tufted carpet. One of the main problems with the nonwoven carpets currently on the market is that they are prone to lower wear and an apparent colour change due to abrasion of the carpet surface layer. This effect is mainly caused by the movement of the shoes on the carpet surface in particularly at the driver side. As this is a visual effect it is noticed by the car owner in an early state, even before the technical features of the carpet are impaired. Also substantial wear can be observed after longer of time use, next to the apparent colour change, a thinning of the top layer due to damaging and or breaking of the fibres in the surface layer will occur eventually leading to formation of a hole in the carpet surface layer.

To fulfil the abrasion specifications and aesthetic requirements of car makers very often the weight of carpet surface layer is increased, however this does not solve the problems. The apparent colour change effect being a visual surface feature cannot be prevented by increasing the area weight of the surface layer. In addition the option of just putting more material is against the trend in the automotive industry to decrease the overall weight of a car, as every kilo material used in a vehicle is directly related to the fuel efficiency and CO2 release of that car.

Hollow fibres are known on the market and mainly used for the bedding and wadding industries as filling fibre. They were also used or described to have better acoustic performance, and were therefore suggested in the past as additional layer for better acoustic performance of automotive trim parts. However they were not suggested as fibres for a nonwoven needle punched carpet layer as it was generally believed that hollow fibres would be more prone to abrasion, in particularly by splitting of the fibres.

The carpet directly under the driver pedals is the area most subjected to wear. Some of that was alleviated in the past by local additional padding. However that is not always the solution. For instance a very rigid carpet surface layer forms gaps that give way under pressure. This can give the costumer an unpleasant experience. A too soft carpet surface layer will not stay in place. A very pliable material is likely to create waves in the carpet during wear, in particularly with throw-in mats this can be a huge problem.

### Summary of invention

It is therefore subject of the invention to overcome the disadvantages of the state of the art in particularly to provide a nonwoven carpet for automotive use with a dual layer carpet which will overcome the problem of apparent colour change of the surface as well as increase the abrasion resistance. It is furthermore a subject of the invention to provide a more soft and appealing surface while assuring a distribution of the load and protect against puncturing and deforming of the reinforcement.

The object is achieved by an automotive carpet according to claim 1. In particular by an automotive carpet that has a dual layer carpet, comprising a needle punched surface layer and an adjacent cushioning layer, both comprising at least approximately 25% by weight of hollow fibre.

All percentages given are percentage by weight.

Surprisingly already 25% by weight of hollow fibres mixed with 75% solid fibre in the surface layer showed an increase in abrasion performance in comparison to 100% solid fibres. The effect was further enhanced by a combination with at least 25% hollow fibres in the cushioning layer. This increased the volume and resilience of the adjacent cushioning layer.

Surprisingly the use of hollow fibres in the surface layer reduced in addition the apparent colour change effect. The more hollow fibres are used the better the performance obtained. However the actual needed amount of hollow fibres is dependent on the colour of the carpet and the acceptance of the car maker of a certain apparent colour change effect, therefore the amount of hollow fibres can be adjusted.

Surprisingly the use of hollow fibres in the cushioning layer further enhances the abrasion performance of the surface layer. It seems that a very rigid material directly below the carpet surface layer increase the abrasion rate of the top layer. On the contrary if this layer is too soft, it will be prone to puncturing and will decrease the appearance and functionality of the carpet.

By using the hollow fibres in the cushioning layer according to the invention the cushioning layer becomes more resilient without becoming a too rigid or too soft surface. The cushioning layer therefore gives way if pressure is put on it for instance by a heel of a shoe, but also mildly if the surface is scuffed by the shoe. The abrasion force will therefore be counterbalanced by the cushioning layer. Furthermore as the fibre layer is mainly bonded by needle punching process the fibres in the layers have some ability to move, increasing the resilience without too much tension on the fibres, as would be the case in a layer with a high binder resin content restricting the fibres more than is needed. This will further enhance the abrasion properties of the needle punched carpet top layer according to the invention.

Although the carpet layer as claimed with hollow fibres in the surface layer and in the adjacent cushioning layer will already provide a better overall abrasion and wear performance, this can be further enhanced by increasing the hollow fibres content and/or by using finer fibres in the surface layer to enhance in particular the coverage of the surface layer or the apparent colour change properties and/or using coarser fibres in the cushioning layer to enhance the resiliency of this layer.

One option would be to have a carpet with a dual layer carpet consisting of 2 needle punched layers comprising of hollow fibres whereby the surface top layer comprise fibres with a lower dtex than the cushioning layer.

The dtex of the fibres is here directed to the majority of the fibres independent of the fact that they are solid or hollow fibres.

The use of finer fibres enhances the aesthetic properties of the surface layer, such as coverage and haptic. However this has a negative effect on the abrasion performance. By using at least 25% of hollow fibres this effect can be partly compensated. Surprisingly the use of a second layer adjacent the surface layer that contains fibres with a coarser dtex as well as contains at least 25% of hollow fibres shows an increased resilience, and counterbalance the effect of the fine fibres in the top layer. Overall showing a good abrasion performance and an aesthetic and haptic appealing surface.

Both materials are consolidated by a mechanical bonding method like needle punching such that principally binding fibres and a thermal bonding is not necessary for the consolidation of the surface layer as such and or the cushioning layer as such.

Surprisingly a further enhancement can be achieved by combining a different dtex in the top surface layer than in the adjacent cushioning layer. By using finer fibres in the surface layer than in the adjacent layer the abrasion properties can be further enhanced, while the use of coarser fibres in the adjacent layer enhances the resilience of the cushioning layer and therefore the overall abrasion and puncture resistance.

By using the same fibrous material in both layers impairments in the surface layer will be less visible in comparison to a classic cushioning layer made of latex, which is currently used in more than 95% of the nonwoven carpets for the automotive industry.

A small amount of a binder in the form of binder fibres, powder or a glue film can be used to thermally bind both layers together. Also mechanical methods can be used to bind both layers together. However a mechanical method should prevent that both layers become fully mixed, the finer fibres should stay in the top area -band- of the dual layer carpet while the coarse fibres should not surface in large quantities. The problem with the current state of the art parts is that they are mixed fully and the fibres are not in the area where they can have the most benefit and the least disadvantages. Therefore just mixing hollow, coarse and fine fibres will not give the same performance as a the current invention where the fibres are allocated to a specific band of the dual layer carpet in comparison to the thickness, the top layer or the lower layer

Most preferred would be a dual layer carpet with 100% hollow fibres being fine fibres in the range of 2 -12 dtex, while the adjacent cushioning layer will contain fibres with a fibre fineness of between 17 and 200 for the majority of fibres, whereby at least part of these fibres are hollow. Preferably at least 70% of the fibres in the cushioning layer has a fibre fineness of between 17 and 200 dtex.

To be more economical the fibres in the cushioning layer can be replaced with reclaimed fibres from an inline recycling or scrap material or recycled material with the same features as given. In particular cut offs of the production of the dual layer carpet according to the current invention can be reused in the cushioning layer. By using the dual layer system according to the invention the surface layer, visible to the car owner would not show the coarser fibres nor the used recycled material.

The weight of the dual layer carpet comprising the surface top layer and the adjacent cushioning layer together would be in the same range of the carpet layers currently used, between 400 - 2000 gsm, while the surface layer will be preferably between 20 and 35% of the overall weight of the dual layer carpet and the cushioning layer will be preferably between 65 and 80%.

For instance a nonwoven carpet layer according to the state of the art has an area weight of 800 gsm (gram/m²). An example of a dual layer carpet according to the invention that could replace such layer would have a surface layer of around 200 gsm, with 35% of hollow fibres and with all fibres having a fineness of approximate 7 dtex, while the cushioning layer has an area weight of around 600 gsm, with 45% hollow fibres and with 80% of the fibres having a dtex of 44. The other 20% might be surface layer material in the form of inline recycling or binding fibres or reclaimed fibres.

The two layers forming the dual layer carpet can be combined using a thermally activated system, like an adhesive layer, preferably in the form of a film, powder or scattered binder fibres. Preferably binding fibres are not used or in low amounts in the adjacent layers as this will restrict the fibres more in a rigid matrix and would partially impair the resilience needed to increase the abrasion.

The bonding of the two layer of the dual layer carpet can take place before the final forming or moulding of the part or during the moulding of the part. The material can be moulded using the processes standard known in the industry.

The staple fibres according to the invention are preferably made of thermoplastic material, for instance polyester polymers including aromatic and aliphatic polyester polymers, or polypropylene as normally found in automotive carpets, or Polyamide like PA6 or PA66. Exemplary polyester polymers include but are not limited to polyethylene terephthalate (PET), polybuthylene terephthalate (PBT) or polytrimethylene terephthalate (PTT). For the mixture of the hollow fibres and the solid fibres preferably the same material is used. This will enable a simple recycling. Preferably the hollow fibres are made of a monomaterial like PET.

As the hollow staple fibres are used for their specific cross section, conjugate or bicomponent fibres losing or changing their shape after needling or other process steps, for instance because they deteriorate, partially shrink or curl, cannot be used in the dual layer carpet according to the invention to form the main structural components of the needle punched surface layer or the cushioning layer.

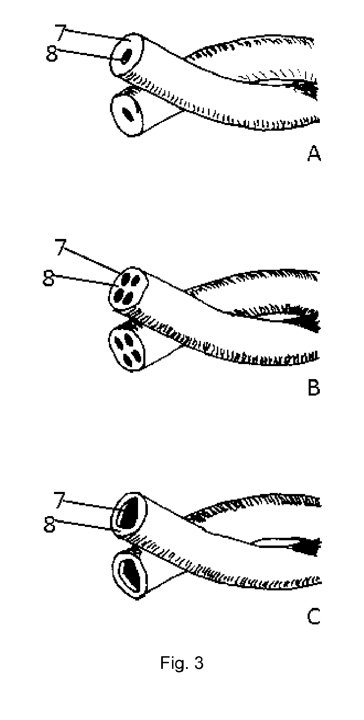

The hollow staple fibres for the needle punch surface layer or the cushioning layer according to the invention have a cross section with at least one void area extending axially over the whole length of the fibre (see figure 3A). Also hollow fibres with multiple void areas extending axially over the whole length of the fibre can be used to form the needle punched carpet surface according to the invention. Hollow fibres are more stable under crushing load than is a solid fibre of equivalent diameter. Also a hollow filament with continuous voids has a higher actual bending modulus than does a solid filament, provided the void ratio is not to great. At any void ratio below 45% for a single hole, the hollow fibre retains a stiffness and resilience comparable with a solid fibre of equivalent mean diameter. Under 10% void ratio is less preferred. Preferably the hollow fibres used have as much as 15 to 35% void space (based on cross-section), preferably between 15%-25%. For hollow fibres with a plurality of holes a void ratio between 10 and 65% is preferential.

Preferably the outer cross section of the hollow fibres is substantially rounded, circular or oval. Because of varying conditions during manufacturing the fibres are rarely perfectly formed. It can be that the polymer material around the hollow area is open so the fibre cross section is more a C than a O, however the majority should be a closed O shape. Fibres made on purpose having an open C shape are principally not defined as being hollow fibre in the sense of the invention disclosed. Preferably the hollow or void area is one core area (2) (Figure 3A and 3C) substantially in the middle of the cross section. However also a cross section with a multiple of smaller hollow areas directed in the axial direction of the fibre can be used according to the invention, for instance 4 hollow tubes (2) as depicted in figure 3B. The hollow area may have other cross sections than the most common round shape, for instance trilobal or square, and will still fall in the scope of the invention as anticipated.

The staple fibres have a staple length normally used for needle punched carpet layers for automotive use, preferably substantially between 40-120 mm, preferably between 50-80 mm.

The hollow staple fibres used are between approximately 2 and 200 dtex, preferably between 2-12 dtex for the carpet surface layer. And preferably at least 70% of the fibres of the cushioning layer are between 17 and 200 dtex. Preferably the main fibre diameter is in the preferred range however a minor portion can be in the range of the other layer, mainly due to cross over of the two layers depending on the production chosen. For instance during part forming or during consolidation process fibres of one layer can end up in the other layer or the contact between the two layers is not clear anymore. Furthermore a smaller amount up to 25% by weight of the cushioning layer can be binder fibres which can have a lower dtex for instance in the range of 2 - 7 dtex. These fibres however would melt and disappear for the largest amount during the forming of the moulded part.

As the cushioning layer is not an outer surface also scrap fibre material or recycled fibre material can be used, including scrap material from the own production line, therefore the cushioning layer can contain a smaller amount of finer fibres or a range of fineness.

The carpet face layer according to the invention comprises substantially of hollow staple fibres. At least up to 100% by weight is hollow staple fibres. (The % by weight is defined as the percentage fibres based on the total fibre weight of the needle punched face layer.) Preferably the amount of hollow fibres is at least 45% by weight, preferably at least 65% by weight.

However in areas of high wear it might be advantageous to combine the hollow staple fibres with additional binding fibres in the cushioning layer. For instance conjugate, bicomponent or low melting staple fibres can be added to increase the locking or binding of the needle punched face. The binding fibres are chosen depending on the hollow fibres used. Preferably the binding fibres are made from low melting polymer like PP or polyester preferably co-Polyester (coPET). The amount of binding fibres may not exceed 25% of the total weight of the cushioning layer.

In areas where the wear is not substantial or a lower level of abrasion performance is asked for a part of the hollow fibres can be replaced with standard polyester solid fibres. Up to 45% of the total fibres used can be such solid staple fibres. This might also be coloured fibres used to enhance the overall aesthetic performance of the needle punch face layer. Many car makers ask for colour matching to individualise the interior appearance of their cars.

The additional fibres are preferably made from the same or similar polymeric material as the hollow staple fibres used. Preferably all staple fibres used are based on the same polymers or family of polymers. Also the use of recycled polymers is an option that fits within the scope of the invention as claimed, in particularly using polyester hollow fibres, eventually together with polyester solid fibres and/or conjugate binding polyester binding fibres, whereby part or all the polyester used is coming from recycled sources of polyester, such as bottle chips.

The dual needle punched carpet face layer according to the invention can be used as a decorative layer for instance as a cover layer for interior trim parts, like a parcel shelf, the trunk floor, or the back of the seats. For this it is enough that the needle punched carpet has an adhesive layer matching the trim part production, normally a thermoplastic material. It is also possible to use the needle punched carpet as the decorative top layer for an optional or throw-in mat, with additional backing layers to comply with the additional requirements specific for such optional mats, like stiffness or anti-skidding. For instance a backing layer of felt, flocking or rubber might be used.

Another possibility is the use of such needle punched material as a decorative face layer for main floor systems. For this the material normally obtains one or more backing layers which perform the acoustic function of the part, like for instance a heavy or mass layer and a decoupling layer to form a noise insulator. Another option is to use an airflow resistant layer for instance a foam or felt layer to obtain a sound absorber.

For instance the acoustic systems as disclosed in EP 934180 A , EP 2365483 A or EP 2364881 A a decorative top layer in the form of for instance a needle punched carpet is used, that has normally no influence on the acoustic performance of the underlying acoustic system. The carpet face layer according to the invention can be used with the acoustic systems as disclosed in these applications without negative interference with the acoustic properties of the disclosed systems.

The area weight of carpet face layer used as standard in vehicles are dependent on the area of use as well as the exclusivity of the car, normally in a range between 180 - 800 gr/m². For instance a high end nonwoven carpet can be up to 2000 gr/m², while in the low end this can be as low as 200 g/m². The same weight applies for the dual face layer according to the invention, however the area weight of the needle punched surface layer is not more than 33% of the overall weight of the carpet.

As the needle punched carpet is used as an aesthetic or decorative face layer the web may be kept as a plain web or the plain needle punched carpet layer may be further enhanced by additional needling to give a more structured surface, this may be in the form of a ribbed, velour or random velour, also known as dilour. Other surface treatments to enhance the appearance without impairing the abrasion results are also possible and fall in the scope of this disclosure.

The dual layer carpet according to the invention, eventually combined with one or more backing layers can be moulded to form a part for the interior of a car, for instance the main flooring or the trunk area. The 3D forming can be done by cold and/ or hot moulding using the conversion processes normally used in the automotive industry. For in particularly the 3D forming binder fibres up to 25% by weight in the cushioning layer can help keep the form and bind the layers together.

### The production process

The needle punched layers are characterized by an intimate three dimensional fibre entanglement produced by the mechanical action of barbed needles rather than by application of heat, moisture and pressure. The hollow and the optional solid fibres are first blended and formed in a fibrous mat either using the carding cross-lapping process or the air-laid process known in the industry. The blended fibre mat is than subjected to a needle punching process known in the industry, whereby barbed needles consolidate the mat from both sides. Eventually a patterning process like dilour can be used on the top surface mat to obtain an aesthetic surface with pleasant feel to the touch.

In a special process a dual card can be used, whereby at least 2 cards are in series, whereby each produced one of the layers and one is placed directly on top of the other. Afterwards both layers will be needled together such that the surface layer will mainly contain the fine fibres and the cushioning layer the coarser fibres. There might be a small intermediate area where all fibres are mixed up.

### Brief description of drawings

Figure 1 Cross section of a Moulded carpet for a vehicle according to the state of the art.
Figure 2 Schematically layering for a carpet with the face layer according to the invention
Figure 3 Different hollow fibre cross sections.

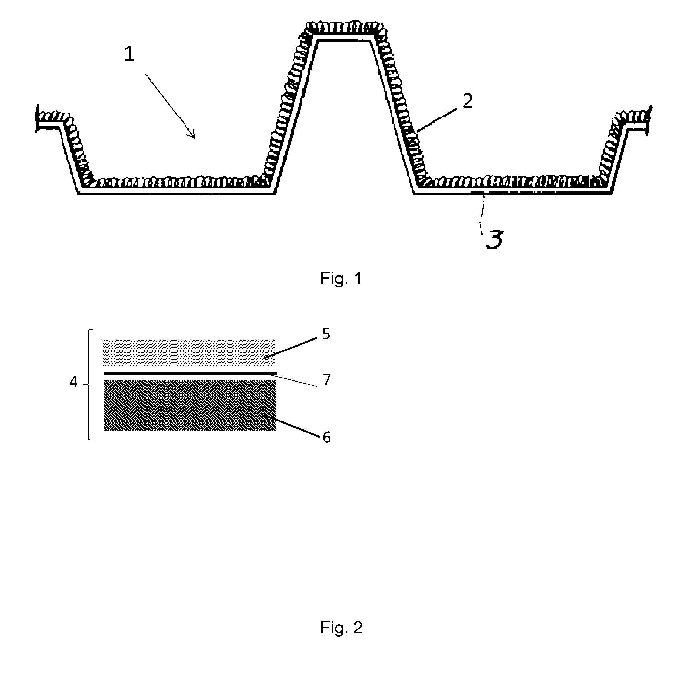

Figure 1 shows cross section of a moulded carpet flooring (1) for a vehicle according to the state of the art comprising a carpet surface layer (2) which can be either a needle punched or tufted surface layer, and a backing layer (3), for instance a latex, thermoplastic, foam or felt layer, these layers can be laminated to each other using an adhesive layer. The backing layer can also be a multilayer system, as known in the art, to enhance acoustic properties in the car. For instance an insulating layer in the form of a mass layer together with a spring layer in the form of a foam or felt layer can be used. The carpet as shown is moulded to follow the floor of the vehicle. Moulding is done using hot or cold moulding as known in the art.

Figure 2 shows the dual layer carpet (4) according to the invention with
- a surface layer (5) being a needle punched carpet layer with at least 25% hollow staple fibres. The surface layer being consolidated mainly by the needle punch process.
- a cushioning layer (6) being a needle punched nonwoven layer with at least 45% hollow fibres. This layer being consolidated mainly by the needle punching process.

The dual layer carpet (4) according to the invention can be used on its own or can replace the carpet layer (2) in a system as disclosed in figure 1. For instance it can be combined with a mass-spring system containing a non-porous heavy or mass layer, for instance EPDM, EVA, PP, PE based layer, such a layer may be filled with minerals, and a decoupling layer, for instance a foam or felt layer. Also a combination of the dual layer carpet according to the invention with a porous backing layer or an additional backing layer in the form of an acoustic absorbing layer is an option.

Eventually an adhesive layer (4) might be used between the dual layer carpet's surface layer and the cushioning layer or between the cushioning layer and the additional layer as well as between the additional layers.

The dual layer carpet according to the invention can also be used for a throw-in mat in the foot well area of the passengers. In particularly in the area before the front seats, the face layer can then be combined with anti-skid backing and possible rubber inlay areas to form such mats as known in the art. Also these mats might be moulded to follow the form of the area where they are used.

In a special example the dual layer carpet is formed in one layer for instance on a dual card with 25% hollow fibres and a fibre fineness of all fibres between 2 and 200 dtex, with at least 20% of the fibres having a fineness of between 2 and 12 dtex, and at least 70% of the other fibres have a fineness of between 17 and 200 dtex and whereby the finer fibres are distributed mainly in a band in the surface area of dual layer carpet, while the coarser fibres are distributed away from the surface in a lower band.

## Claims

1. A dual layer carpet comprising at least a needle punched surface layer made of staple fibres and an adjacent needle punched cushioning layer made of staple fibres **characterised in that** the surface layer and the cushioning layer comprise of at least 25% of hollow staple fibres.

2. Dual layer carpet according to the claim 1, whereby the dtex of the staple fibres of the surface layer is equal or finer as the dtex used for the cushioning layer and whereby the dtex of staple fibres of the surface layer is between 2 and 12.

3. Dual layer carpet according one of the preceding claims whereby at least 75% by weight of the staple fibres of the cushioning layer have a dtex of between 17 and 200.

4. Dual layer carpet surface according to one of the preceding claims whereby the content of binder fibres is less than 25% in the cushioning layer.

5. Dual layer carpet according to one of the preceding claims whereby there are no binder fibres in the surface layer.

6. Dual layer carpet according to one of the preceding claims whereby the area weight of the dual layer carpet is between 400 and 2000 and whereby the area weight of the surface layer is only 20 to 35% of the total weight.

7. Dual layer carpet according to one of the preceding claims whereby the surface layer and the cushioning layer are bond together by mechanical entanglement.

8. Dual layer carpet according one of the preceding claims whereby the surface layer and the cushioning layer are bond by a thermally activated binder layer, preferably by an adhesive film, scrim, binder fiber layer or powder binder.

9. Dual layer carpet whereby the hollow staple fibres have a void ratio of 10 to 45% when only a single hole is present, or a void ration between 10 and 65% when a plurality of holes is present.

10. Carpet system comprising a dual layer carpet according to one of the preceding claims and at least one of a heavy layer, a decoupling layer in the form of a felt or foam, an acoustic absorbing layer, an additional felt backing layer or an additional foam backing layer or a closed film.

11. Use of a dual layer carpet according to claim 1 to 9 or the carpet sytem according to claim 10 as a 3D moulded part for a car.
